# EUROPEAN PATENT APPLICATION

(11) **EP 0 572 884 A1**
(43) Date of publication of application: **08.12.1993**
(21) Application number: 93108324.0
(22) Date of filing: 24.05.1993
(51) Int. Cl.: B62J 1/16

(54) **Cushioned auxiliary child-carrying seat for bicycles which is removable and adjustable**

(30) Priority: 01.06.1992 IT BG920023
(71) Applicant: STAMP S.r.l., I-24060 Telgate (Bergamo) (IT)
(72) Inventor: Erli, Pierangelo, I-24060 Telgate (Bergamo) (IT)
(74) Representative: Luksch, Giorgio, Dr.-Ing.

(57) **Abstract**

The auxiliary child-carrying seat (4) for bicycles has the feature of being supported by a bracket (5) consisting of a steel rod bent to U-shape with parallel sides (5A, 5B) to enable its lower guides to slide such as to vary its distance from the region (3) in which it is fixed to the bicycle and to enable its predetermined locators (4B) to reach the required position, said locators being always bearingly engaged by virtue of a pivoting action exerted by the forwardly positioned constraining and slide holes (4A).

The seat is constrained to the bicycle (1) by fixing the free ends of the constituent U-shaped rod of the bracket into two pairs of essentially vertical holes (6A, 6A') in a metal box structure (6) hinged by a horizontal base pin (12) to a multifunctional block (3) fixed to the upright tube (1) supporting the bicycle saddle (2) by a usual U-piece (19).

## Description

This invention relates to the field of auxiliary seats for bicycles.

There has always been a requirement for providing bicycles with an auxiliary seat allowing a child to be transported.

The arrangements already in use for this purpose generally comprise seats rigidly fixed directly to the bicycle frame, with the result that they are particularly rigid and uncomfortable.

The discomfort is such as to be able to result in physical disturbance due to the violent impacts which characterise it.

Such usual seats are generally fixed, so that it becomes a problem to remove the child from the seat and suitably accommodate him when descending on reaching the destination.

An object of the present invention is to define an auxiliary child-carrying seat for bicycles which is properly sprung.

A further object is to spring said seat such that it is substantially cushioned.

A further object is to define a seat with a connector which can be mounted on any type of bicycle.

A further object is to define a connector of the aforesaid type, the inclination of which can be adjusted to a certain extent.

A further object is to define a seat the springing of which can be adjusted.

A further object is to define a seat which allows the feet to be always supported by virtue of means for adjusting the distance between the support level and the level of the sitting surface.

These and further objects which will be apparent on reading the following detailed description are attained by an auxiliary child-carrying seat for bicycles characterised by being supported by a bracket consisting of a steel rod bent to U-shape with parallel sides to enable its lower guides to slide such as to vary its distance from the region in which it is fixed to the bicycle and to enable its predetermined locators to reach the required position, said locators being always bearingly engaged by virtue of a pivoting action exerted by forwardly positioned constraining and slide holes. The seat is constrained to the bicycle by fixing the free ends of the constituent U-shaped rod of the bracket into two pairs of essentially vertical holes in a metal holder hinged by a horizontal base pin to a multifunctional block fixed to the upright tube supporting the bicycle saddle by a usual U-piece, said metal holder being able to swivel with its upper slots concentric to the horizontal base pin so as to be able to be locked with freely chosen inclination to a sleeve rigid with the multifunctional block via rubber cushioning and damping pads which are urged by the jolting to which the seat is subjected when the bicycle is in movement. The seat is also provided with a foot rest which can slide vertically in the manner of a drawer by its engagement with profiled edges provided for this purpose, hence enabling it to be positioned at various levels by the engagement between pairs of lateral undercuts and the edges of holes provided in the body of the seat, and against which they are maintained by the automatic elastic insertion of two central buttons into specific conjugate holes from which they can be removed only by simultaneously pushing both, so achieving protection against accidental release.

The invention is illustrated by way of non-limiting example on the accompanying drawings, in which:
Figure 1 shows the rear end of a bicycle on which a seat is mounted;
Figure 2 is a side view of a fixing device fixed to the typical oblique saddle-carrying upright of the bicycle;
Figure 3 is a partly sectional top view of a fixing device fixed to the oblique upright;
Figure 4 is a perspective rear view of a part of the seat, housing the right leg, associated with a foot rest of adjustable level;
Figure 5 is an exploded perspective view of the fixing device for fixing to the upright of the bicycle.

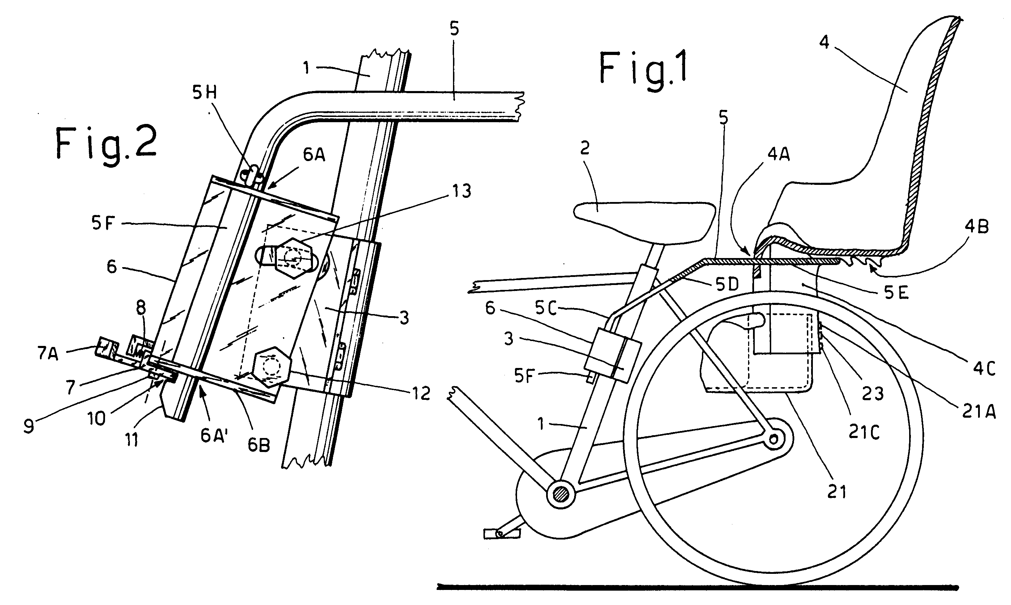

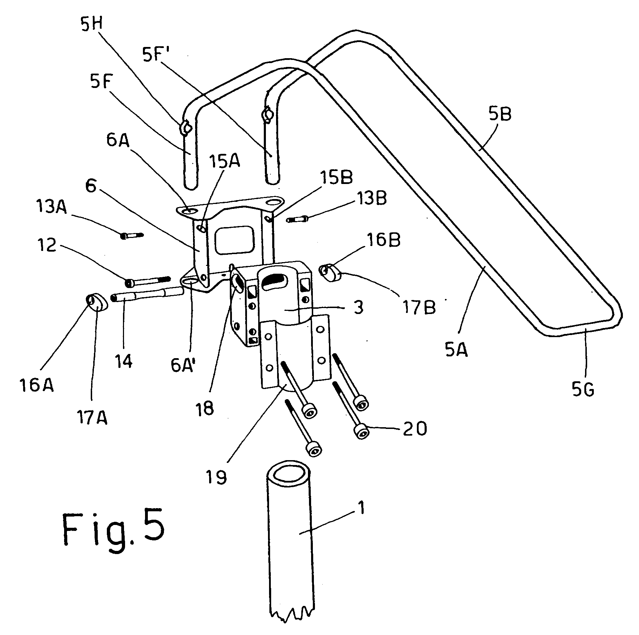

With reference to Figures 1 and 5, it can be seen that the section of Figure 1 is taken on a vertical plane passing through the part 5A of a bracket 5. In this figure a block 3 for supporting a child's seat 4 is fixed to the oblique upright 1 which supports the saddle 2. This supporting action is achieved by the bracket 5, consisting of a strong steel rod shaped into two planes, such that in one plane it is U-shaped with straight parallel portions 5A, 5B (Figure 5) and in another plane, perpendicular thereto, it comprises angular portions 5C, 5D, 5E (Figure 1).

The free ends 5F, 5F' of the bracket 5 pass through frontal holes 4A in the seat to enable its transverse portion 5G to be inserted into parallel recesses 4B provided on the lower side of the seat base. In this manner that seat region comprising the holes 4A forms a front fulcrum about which the seat 4 can potentially pivot to rest freely on the horizontal portion 5G of the bracket 5.

This bracket is fixed to the block 3 by its ends 5F, 5F', so that the more the seat 4 is positioned towards the rear by sliding it via its holes 4A along the parallel portions 5A and 5B, the more the arm with which the weight force of the child and seat act on said bracket 5 increases.

This results in a greater flexural moment which increases the deformation of the bracket or the elastic excursion of the seat. Cushioning is therefore achieved even with only slight ground roughness.

To reduce the cushioning effect it is necessary merely to move the seat more forwards.

The bracket 5 is removably fixed to the block 3. In this respect its ends 5F are inserted through holes 6A-6A' (Figure 2) in a metal box structure 6, preferably of sheet steel, until their upset projections 5H come to rest. In correspondence with the lower surface 6B there operates a latch 7 in the form of a lever pivoted with a pin 9 and sprung by usual means 8 so that it remains engaged in a slot 10 provided in the bracket in a position corresponding with the latch 7, when the free ends 5F have been completely inserted as far as allowed by the projections 5H.

A bevel 11 provided on the two free ends 5F enables them to be inserted through the holes 6A and 6A' of the metal box structure 6 notwithstanding the presence of the latch 7, as the bevel causes the latch to withdraw, it then elastically returning into the slot 10 to prevent extraction of the free end 5F, or of the bracket 5, from the supporting metal box structure 6. Such extraction is however possible by moving the constituent lever of said latch 7 to the position 7A.

Said box structure 6 is fixed to the block rigid with the upright 1 by a pivoting bolt 12 and by clamping bolts 13A and 13B engaged in a threaded sleeve 14.

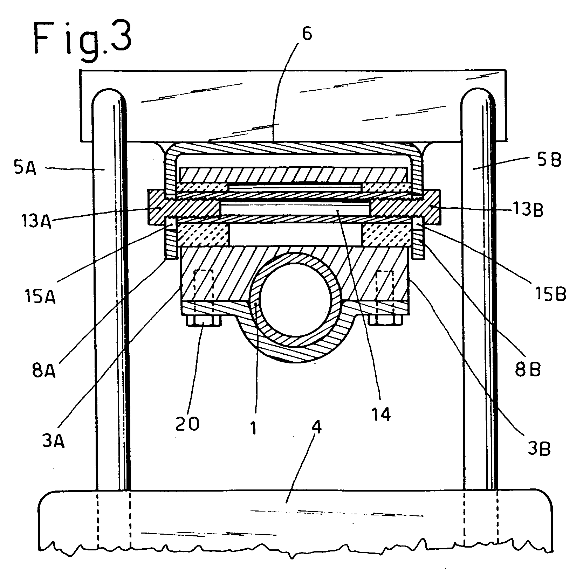

The threaded sleeve 14 projects slightly from the sides 3A and 3B of the block 3 (Figure 3), so that the said clamping by the bolts 13A and 13B locks the sides 8A and 8B of the metal box structure 6 against the ends of the sleeve 14. This locking is achieved by friction and enables the metal box structure 6 to be positioned within a range defined by the length of slots 15A, 15B.

As the metal box structure is pivoted lowerly by means of the bolt 12 rigid with the block 3 and inserted into a precise hole therein, the adjustment movement of the bolts 13A and 13B within the slots 15A and 15B takes the form of a circular arc, resulting in a variation in the inclination of the metal box structure to the fixing block 3, ie to the bicycle upright 1.

Whereas the lower bolt 12 is directly rigid with the block 3, the sleeve 14 is elastically or indirectly rigid with the bock 3.

In this respect, it is housed in holes 16A, 16B in respective rubber pads 17A, 17B forcibly housed in their seats 18 in the block 3 and providing a cushioning action by virtue of the hysteresis which is a feature of rubber.

In this manner the metal box structure 6 can rock elastically about its base pin 12 by virtue of the deformation which it imposes on the two rubber pads 17A, 17B, and for any predetermined fixed position relative to the sleeve 14 as allowed by the two slots 15A and 15B.

The block 3 is preferably constructed of reinforced thermoplastic engineering polymer and is in the form of a half-shell to close about the upright 1 by clamping to a further complementary half-shell 19 by bolts 20.

With reference to Figure 1 and taking into account the form of the seat (sectioned through a region slightly to the side of its centre line, ie with an eccentricity equal to one half the width of the U into which the bracket of Figure 5 is formed) it is apparent that the foot rest is for the right foot and falls outside the sectioning plane. It consists of a vertically slidable independent element 21 guided by a vertical extension 4C of the seat 4, specifically provided for supporting and protecting the right foot of the child.

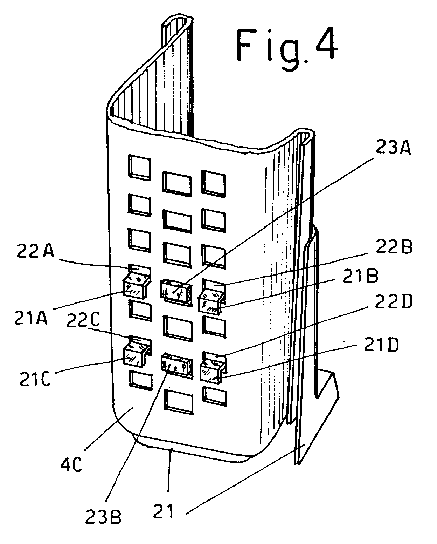

The independent element 21 is provided at its rear with teeth. In Figure 4 these teeth are more clearly indicated by 21A, 21B, 21C, 21D, and are engaged in suitable holes in the vertical extension 4C.

The teeth are right-angled with their free end downwards. They are inserted into square holes 22A, 22B, 22C, 22D having a cross-section at least equal to that of the surface of the free end of the teeth 21, to enable these to be freely inserted horizontally.

After insertion they are lowered vertically so that the free ends of the teeth are unable to withdraw as they rest against the rear surface of the vertical extension 4C.

The teeth 21A, 21B, 21C, 21D can be withdrawn from their square holes only by raising the foot rest 21. It is therefore sufficient to eliminate this possibility to achieve reliable retention or fixing of the foot rest 21 to the extension 4C.

This is effected by cooperation between elastic buttons 23A, 23B rigid with the foot rest 21 and conjugate holes provided in the vertical extension 4C.

These holes are provided in a position which can be reached only when the teeth 21A, 21B, 21C, 21D have been completely engaged or completely lowered. When this happens the buttons 23A, 23B snap outwards into said predetermined holes to prevent any vertical movement of the foot rest 21 of which the buttons form part.

The elasticity of said buttons is achieved by known methods, for example by providing them at the ends of projecting elastic blades integral with the foot rest structure 21. To remove or vary the level of the foot rest 21, both the buttons 23A and 23B must firstly be pressed until they disengage from the edges of the holes into which they are inserted, after which the foot rest 21 can be moved vertically.

## Claims

1. An auxiliary child-carrying seat (4) for bicycles characterised by being supported by a bracket (5) consisting of a steel rod bent to U-shape with parallel sides (5A, 5B) to enable its lower guides (4A) to slide such as to vary its outward distance from the region (3) in which it is fixed to the bicycle (1) and to enable its predetermined locators (4B) to reach the required position, said locators being always bearingly engaged by virtue of a pivoting action exerted by the edges of forwardly positioned constraining and slide holes (4A).

2. An auxiliary child-carrying seat (4) for bicycles in accordance with the preceding claim, characterised by being constrained to the bicycle (1) by fixing the free ends (5F, 5F') of the constituent U-shaped rod of the bracket (5) into two pairs of substantially vertical holes (6A, 6A') in a metal box structure (6) hinged by a horizontal base pin (12) to a multifunctional block (3) fixed to the upright tube (1) supporting the bicycle saddle (2) by a usual U-piece (19), said metal box structure (6) being able to swivel via its arched upper slots concentric to the horizontal base pin (12) so as to be able to be locked (13A, 13B) with freely chosen inclination to a sleeve (14) rigid with the multifunctional block (3) via rubber cushioning and damping pads (17A, 17B) which are urged by the jolting to which the seat (4) is subjected when the bicycle is in movement.

3. An auxiliary child-carrying seat (4) for bicycles in accordance with the preceding claims, characterised by a foot rest (21) which can slide vertically in the manner of a drawer by its engagement with profiled edges provided for this purpose, hence enabling it to be positioned at various levels by the engagement between pairs of teeth (21A-21B, 21C-21D) with lateral undercuts and the edges of holes (22A, 22B, 22C, 22D) provided in the body (4C) of the seat (4), and against which they are securely maintained by the automatic elastic insertion of two central buttons (23A, 23B) into specific conjugate holes, from which they can be removed only by simultaneously pushing both, so achieving protection against accidental release.

4. An auxiliary child-carrying seat (4) for bicycles in accordance with the preceding claims, characterised by being removable because of the free insertion of bevelled (11) ends (5F, 5F') of the constituent bent rod of the bracket (5) through appropriate pairs of holes (6A, 6B) in a metal box structure (6), the base of said metal box structure being associated with a latch which automatically engages by virtue of elastic means (8) cooperating with a lever structure of said latch and allowing the latch (7) to be disengaged from an operationally cooperating slot (10) on command (7A).
